(19)

Europäisches Patentamt
European Patent Office
Office européen des brevets

(11) **EP 4 692 163 A1**

(12) **EUROPEAN PATENT APPLICATION**
published in accordance with Art. 153(4) EPC

(43) Date of publication:
**11.02.2026 Bulletin 2026/07**

(21) Application number: 23931792.8

(22) Date of filing: **17.11.2023**

(51) International Patent Classification (IPC):
**C08G 63/672** (2006.01)     **C08G 63/00** (2006.01)

(52) Cooperative Patent Classification (CPC):
**C08G 63/00; C08G 63/183; C08G 63/672;
C08G 63/84; C08G 63/85**

(86) International application number:
**PCT/CN2023/132271**

(87) International publication number:
**WO 2024/207746 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.04.2023  CN 202310358134**

(71) Applicants:
 • **China Petroleum & Chemical Corporation
   Beijing 100728 (CN)**
 • **Sinopec (Beijing) Research Institute of
   Chemical Industry Co., Ltd.
   Beijing 100013 (CN)**

(72) Inventors:
 • **YIN, Jie
   Beijing 100013 (CN)**
 • **ZHANG, Longgui
   Beijing 100013 (CN)**
 • **HAN, Ling
   Beijing 100013 (CN)**

 • **ZHU, Guixiang
   Beijing 100013 (CN)**
 • **WANG, Shen
   Beijing 100013 (CN)**
 • **REN, Minqiao
   Beijing 100013 (CN)**
 • **JIA, Xuefei
   Beijing 100013 (CN)**
 • **SONG, Jianhui
   Beijing 100013 (CN)**
 • **AN, Jingyan
   Beijing 100013 (CN)**
 • **ZHAO, Jianfeng
   Beijing 100013 (CN)**
 • **ZHANG, Wei
   Beijing 100013 (CN)**
 • **ZHANG, Xinru
   Beijing 100013 (CN)**

(74) Representative: **Hoffmann Eitle
   Patent- und Rechtsanwälte PartmbB
   Arabellastraße 30
   81925 München (DE)**

(54) **POLYESTER ELASTOMER CONTAINING FURAN RING, AND PREPARATION METHOD THEREFOR AND USE THEREOF**

(57)   The present invention belongs to the technical field of polymers, and in particular relates to a furan ring-containing polyester elastomer and preparation process thereof. The present invention adopts an approach of adding monomers into the reaction equipment in one shot to carry out a continuous reaction to prepare a high molecular weight, random copolymerized, furan ring-containing aliphatic-aromatic copolyester elastomer, so as to obtain a narrow distribution, high molecular weight product with an elastic recovery rate greater than 70%. The preparation process provided by the present invention is simple to operate and has strong process controllability, thus providing a novel process for preparing degradable thermoplastic copolyester elastomers, and the process is prone to realize the industrialization of products.

EP 4 692 163 A1

**(Cont. next page)**

Figure 12b

## Description

## Technical Field

The present invention belongs to the technical field of polymers, and in particular relates to a furan ring-containing polyester elastomer and preparation process and use thereof.

## Background of Art

As a solution to the shortage of fossil resources such as petroleum, the use of renewable biomass resources to synthesize various monomers and polymers is a new direction for the development of the chemical and energy industries. Bio-based polymer materials can effectively reduce environmental pollution and promote sustainable development. Typical bio-based polymers include polylactic acid (PLA), polybutylene succinate (PBS), and polyhydroxyalkanoates (PHA). Compared with petroleum-based polyethylene terephthalate (PET) and polybutylene terephthalate (PBT), they have poor heat resistance and mechanical properties. The fundamental reason is the lack of rigid aromatic rings in the molecular structure. 2,5-Furandicarboxylic acid (2,5-FDCA) is one of the 12 most promising bio-aromatic platform compounds selected by the U.S. Department of Energy. Compared with terephthalic acid (TPA)-based aliphatic-aromatic copolyesters, biomass-derived FDCA-based aliphatic-aromatic copolyesters not only have comparable thermal/mechanical properties, and are expected to replace petroleum-based aromatic platform compounds such as terephthalic acid to synthesize high-performance bio-based polymer materials, but also have potential biodegradability and are an excellent environmentally friendly material.

PBST (poly(butylene succinate-co-terephthalate)) is a new type of aliphatic/aromatic copolyester. It is a new type of biodegradable polymer obtained by chemical modification on the basis of polybutylene succinate (PBS). It retains the biodegradability and good thermal properties of PBS, and at the same time has the characteristics such as excellent mechanical property, high melting point and high crystallization rate of polybutylene terephthalate (PBT). It is a biodegradable material with great potential. The properties of PBST copolymers are closely related to the ratio of aromatic copolymer units to aliphatic copolyester units and the average sequence length.

## Summary of the Invention

The present invention provides a furan ring-containing polyester elastomer. A furan ring monomer of bio-based origin is introduced into a polyester material as a fourth monomer. An aliphatic-aromatic copolyester material with excellent mechanical property and degradation property is obtained through an esterification-melt polycondensation method. The copolyester has excellent thermal/mechanical properties related to the composition, exhibits the characteristics of an elastomer within a certain composition range, possess an excellent resilience, and has potential biodegradability.

The first object of the present invention is to provide a furan ring-containing polyester elastomer, comprising a reaction product of component (a) furandicarboxylic acid and/or ester thereof, component (b) aromatic dibasic acid and/or aromatic dibasic ester, component (c) aliphatic dibasic acid and component (d) aliphatic dihydric alcohol;

the ratio of the total amount by mole of component (a) and component (b) to the amount by mole of component (c) is 1:(0.9-1.05), e.g. 1:(0.95-1.02), or 1:(0.96-1.01);
the molar ratio of component (a) to component (b) is 1:(0.4-1.8), preferably 1:(0.4-1.2);
the elastomer has an elongation to break of >1500%, and an elastic recovery rate of greater than 70%, preferably, the elastomer has an average elastic recovery rate of not less than 80%, more preferably, the elastomer has an average elastic recovery rate of not less than 90%.

According to the present invention, the furan ring-containing polyester elastomer has a weight average molecular weight of greater than 60,000, and a molecular weight distribution of 1.6-2.3; preferably, the furan ring-containing polyester elastomer has a weight average molecular weight of greater than 100,000, and a molecular weight distribution of 1.6-2.0.

According to the present invention, the furan ring-containing polyester elastomer has an elastic self-enhancement ability, preferably, the furan ring-containing polyester elastomer has an elastic recovery rate of greater than 85% when the stretch ratio is 500% or higher, and an elastic recovery rate of greater than 90% when the stretch ratio is 800% or higher. According to the present invention, the elastomer has a tensile modulus of 10-75MPa and a tensile strength at break of 4-20MPa.

According to the present invention, in the furan ring-containing polyester elastomer:

the component (a) is at least one of 2,5-furandicarboxylic acid, dimethyl 2,5-furandicarboxylate, diethyl 2,5-furandicarboxylate;

the component (b) is selected from $C_8$-$C_{18}$ aromatic dibasic acid or aromatic dibasic ester compounds, preferably at least one of terephthalic acid, terephthalic acid ester, isophthalic acid, and isophthalic acid ester, more preferably terephthalic acid;

the component (c) is at least one of $C_2$-$C_{18}$ aliphatic dibasic acids, preferably at least one of sebacic acid, succinic acid, and adipic acid, more preferably at least one of succinic acid and adipic acid;

the component (d) is at least one of $C_2$-$C_8$ dihydric alcohols, preferably at least one of ethylene glycol, 1,3-propylene glycol, 1,4-butylene glycol, 2-methyl-1,3-propylene glycol, and neopentyl glycol, more preferably 1,4-butylene glycol.

According to the present invention, by using a specific ratio of a furan ring-containing component (a) and an aromatic ring-containing component (b), a certain amount of furan-based polyester segments are formed in the system, and the crystallinity of the polyester is regulated, so that the copolyester has excellent resilience and exhibits the characteristics of an elastomer.

The second object of the present invention is to provide a process for preparing the above-mentioned furan ring-containing polyester elastomer, comprising: subjecting component (a) furandicarboxylic acid and/or ester thereof, component (b) aromatic dibasic acid and/or aromatic dibasic ester, component (c) aliphatic dibasic acid, component (d) aliphatic dihydric alcohol to esterification reaction, pre-polycondensation reaction, and final polycondensation reaction in sequence to produce the furan ring-containing polyester elastomer. According to the present invention, the preparation process specifically comprises the following steps:

(1) subjecting component (a), component (b), component (c) and component (d) to an esterification reaction under the action of a first catalyst;

(2) when the esterification rate reaches 92-98%, a pre-polycondensation reaction is carried out under the action of a second catalyst;

(3) subjecting the reaction system obtained in step (2) to a final polycondensation reaction to produce the furan ring-containing polyester elastomer.

According to an embodiment of the present invention, in the process for preparing the furan ring-containing polyester elastomer:

the component (a) is at least one of 2,5-furandicarboxylic acid, dimethyl 2,5-furandicarboxylate, diethyl 2,5-furandicarboxylate;

the component (b) is selected from $C_8$-$C_{18}$ aromatic dibasic acid or aromatic dibasic ester compounds, preferably at least one of terephthalic acid, terephthalic acid ester, isophthalic acid, and isophthalic acid ester, more preferably terephthalic acid;

the component (c) is at least one of $C_2$-$C_{18}$ aliphatic dibasic acids, preferably at least one of sebacic acid, succinic acid, and adipic acid, more preferably at least one of succinic acid and adipic acid;

the component (d) is at least one of $C_2$-$C_8$ dihydric alcohols, preferably at least one of ethylene glycol, 1,3-propylene glycol, 1,4-butylene glycol, 2-methyl-1,3-propylene glycol, and neopentyl glycol, more preferably 1,4-butylene glycol;

the first catalyst includes an organic titanium compound and at least one compound containing antimony, germanium, zirconium, stannum, magnesium, cobalt, aluminium or zinc, preferably includes an organic titanium compound and at least one organic stannum compound; wherein the organic titanium compound is selected from tetrabutyl titanate, tetra-n-propyl titanate, tetra-isopropyl titanate, tetraethyl titanate, and titanium glycolate, the organic stannum compound is at least one of stannous octoate, stannous oxalate, dibutyltin oxide, butyltinhydroxide-oxide, dibutyltin diacetate, dioctyltin oxide, and butyltin tris(2-ethylhexanoate); based on 100 parts by weight of the total amount of the first catalyst, the organic titanium compound comprises 45-85 parts, e.g. 55-75 parts or 75-85 parts; the organic stannum compound comprises 15-55 parts, e.g. 25-45 parts or 15-25 parts;

the second catalyst is at least one of lanthanide series metal compounds, preferably at least one of lanthanum chloride, lanthanum acetylacetonate, neodymium isopropoxide, and lanthanum stearate.

According to an embodiment of the present invention, in the process for preparing the furan ring-containing polyester elastomer, in step (1):

the ratio of the total amount by mole of component (a), component (b) and component (c) to the amount by mole of component (d) is 1:(1.05-4), preferably 1:(1.2-2);

the ratio of the total amount by mole of component (a) and component (b) to the amount by mole of component (c) is 1:(0.9-1.05), e.g. 1:(0.95-1.02), or 1:(0.96-1.01);

the molar ratio of component (a) to component (b) is 1:(0.4-1.8), preferably 1:(0.4-1.2); the used amount of the first catalyst is 0.01-1%, e.g. 0.1-0.3% or 0.05-0.2% by weight of the total of component (a), component (b) and component (c);

the conditions of the esterification reaction are as follows: the esterification temperature is 130-210°C, preferably 150-190°C; the reaction time can be 1-5 hours, preferably 2-3 hours; the reaction atmosphere is a protective gas, e.g. nitrogen gas.

According to an embodiment of the present invention, in the process for preparing the furan ring-containing polyester elastomer, in step (2):

the used amount of the second catalyst is 0.01-0.5%, preferably 0.05-0.2% by weight of the total of component (a), component (b) and component (c);
the conditions of the pre-polycondensation reaction are as follows: the reaction temperature is 150-220°C, preferably 190-210°C; the reaction time is 0.5-2.5 hours, preferably 1-1.5 hours; the vacuum degree is 600-5000Pa, preferably 1000-2000Pa.

According to an embodiment of the present invention, in the process for preparing the furan ring-containing polyester elastomer, in step (3), the conditions of the final polycondensation reaction are as follows:

the reaction temperature is 210-260°C, preferably 230-250°C;
the reaction time is 1-5 hours, preferably 2-4 hours;
the vacuum degree is ≤300Pa, e.g. ≤150Pa, or ≤50Pa.

According to the present invention, the process for preparing the furan ring-containing polyester elastomer can adopt the following specific preparation procedure:

step 1: in the presence of a first catalyst and a protective gas atmosphere, component (a), component (b), component (c), and component (d) are subjected to an esterification reaction in an esterification reactor, and introduced into a polycondensation reactor for the next reaction when the esterification rate reaches 92-98%;
step 2: in the presence of a second catalyst, the product from the esterification reactor is introduced into a pre-polycondensation reactor for polycondensation, and a vacuum reaction condition is gradually established so that the vacuum degree is maintained between 600 and 5000 Pa. The reaction is carried out for a certain period of time and the resulting pre-polycondensate is introduced into the next reaction;
step 3: the pre-polycondensate is reacted in a final-polycondensation reactor, and the vacuum degree is controlled at ≤300Pa to finally produce a furan ring-containing polyester elastomer.

The third object of the present invention is to provide use of the above-mentioned furan ring-containing polyester elastomer or the furan ring-containing polyester elastomer obtained by the above-mentioned preparation process in biodegradable materials.

In the present invention, the furan ring of component (a) and the benzene ring of component (b) have certain structural differences, which makes the two acids different in electronegativity, aromaticity and thermostability. FDCA is a $\pi$-electron-rich heterocyclic system, and has an aromaticity less than PTA. Due to the influence of the oxygen atom of its own aliphatic ring, the electrophilicity of the carboxyl carbon in FDCA is weaker. FDCA has two carboxyl groups with a certain bond angle, and therefore it is a polar molecule. The furan rings on the repeating units of the aliphatic-aromatic copolyesters synthesized from the two acids are asymmetric, making the chain segments difficult to flip. At the same time, the furan ring has a permanent dipole moment because the positive and negative charge centers do not overlap, thereby generating electrostatic force, which increases the interaction force between chains, increases the chain rigidity and decreases the mobility of the chain segments. The prepared furan-based polyester shows the superiority of the asymmetric rigid ring structure in mechanical, thermal and barrier properties. Therefore, the present invention adopts a specific ratio of a furan ring-containing component (a) and an aromatic ring-containing component (b) to form a certain amount of furan-based polyester segments in the system, thereby regulating the crystallinity of the polyester, so that the copolyester has excellent resilience, exhibits the characteristics of elastomer, and has excellent fatigue resistance and elasticity self-enhancement effect.

A bio-based furan ring-containing polyester elastomer of the present invention, which can be prepared with bio-based raw materials, will partially replace the application of traditional petroleum-based elastomer materials, thereby reducing the consumption of petroleum materials and achieving sustainable development of resources; and it not only has good thermal and mechanical properties, but also has potential biodegradability.

Compared with the prior art, the present invention has the following beneficial effects:

(1) The present invention adopts an approach of adding monomers into the reaction equipment in one shot to carry out a continuous reaction to prepare a high molecular weight, random copolymerized, furan ring-containing aliphatic-aromatic copolyester elastomer, which is a narrow distribution, high molecular weight polyester elastomer. Preferably, the polyester elastomer has a weight-average molecular weight of greater than 100,000 and a molecular weight distribution of 1.6-2.0.

(2) By optimizing the catalyst system and polymerization process and controlling the feeding ratio, the present invention can produce a polyester product having a copolymerization unit ratio consistent with the feeding ratio. By adjusting the ratio of the furan-based monomer to the aromatic-based monomer, furan-based polyesters with different aromatic unit compositions can be obtained, which provides aliphatic-aromatic copolyesters with good toughness and resilience characteristics, thereby obtaining copolyester elastomers that meet different use requirements and further expanding their application areas.

(3) The present invention does not require the copolymerization of soft segments and hard segments to obtain an elastomeric material. Instead, it only requires the combination of the furan-based monomer to the aromatic-based monomer in a specific ratio to achieve the precise control of the resilience performance of the resulting polyester material. Furthermore, the polyester material can become an ideal bio-based elastic material for use under repeated load conditions, and has excellent fatigue resistance and elasticity self-enhancement effect.

(4) The preparation process provided by the present invention is simple to operate and has strong process controllability, thus providing a novel process for preparing degradable thermoplastic copolyester elastomers, and the process is prone to realize the industrialization of products.

## Description of the drawings

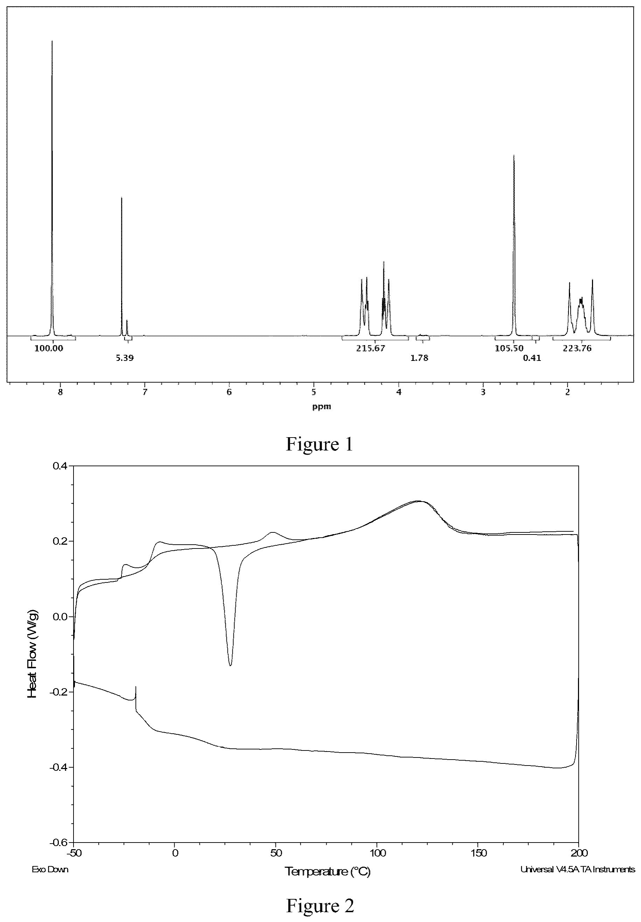

Figure 1 is a hydrogen nuclear magnetic spectrum of the furan ring-containing polyester elastomer obtained in Comparative Example 1;
Figure 2 is a DSC spectrum of the furan ring-containing polyester elastomer obtained in Comparative Example 1;

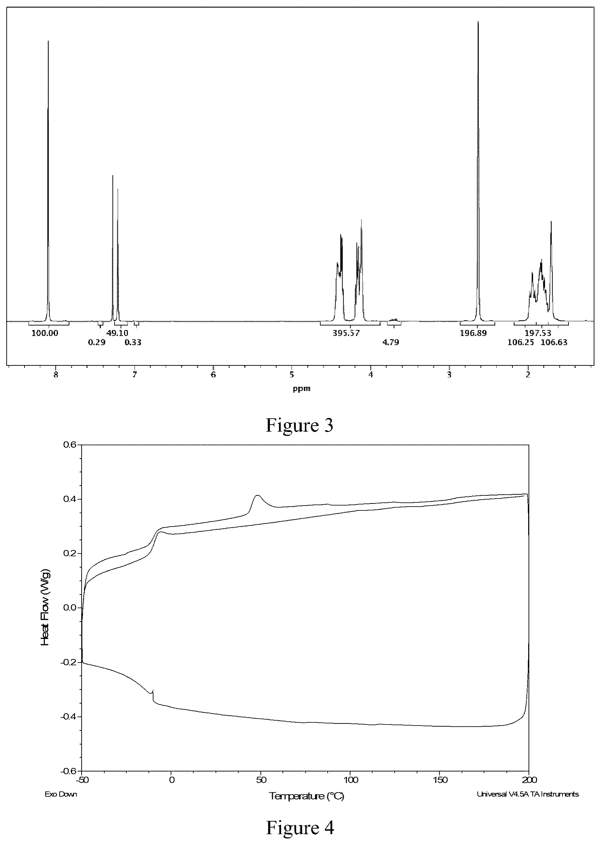

Figure 3 is a hydrogen nuclear magnetic spectrum of the furan ring-containing polyester elastomer obtained in Example 1;
Figure 4 is a DSC spectrum of the furan ring-containing polyester elastomer obtained in Example 1;
Figure 5 shows cyclic tensile hysteresis loops of the furan ring-containing polyester elastomer obtained in Example 1 under 100-1400% strain conditions;
Figure 6 shows the elastic recovery rate versus stress curve of the furan ring-containing polyester elastomer obtained in Example 1 under 100-1400% strain conditions;
Figure 7 shows (a) the elastic recovery rate and (b) the corresponding tensile modulus and dissipated energy of the furan ring-containing polyester elastomer obtained in Example 1 during 10 consecutive stretching cycles at 300% strain condition;

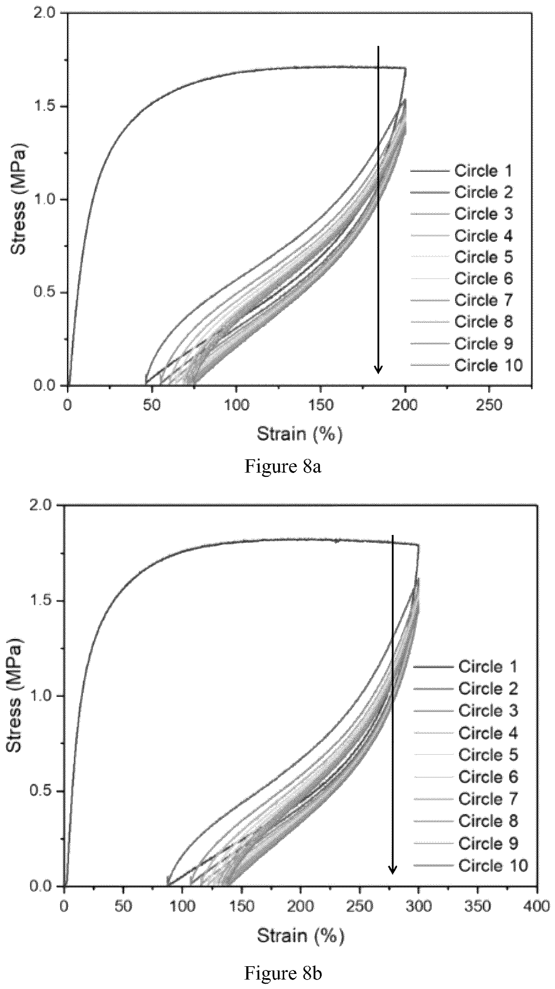

Figure 8 shows cyclic stretching curves of the furan ring-containing polyester elastomer obtained in Example 1: (a) stretching curves for 1st to 10th cycles at 200% strain, (b) stretching curves for 1st to 10th cycles at 300% strain; the curves in the figure are stretching curves for 1st to 10th cycles from top to bottom;

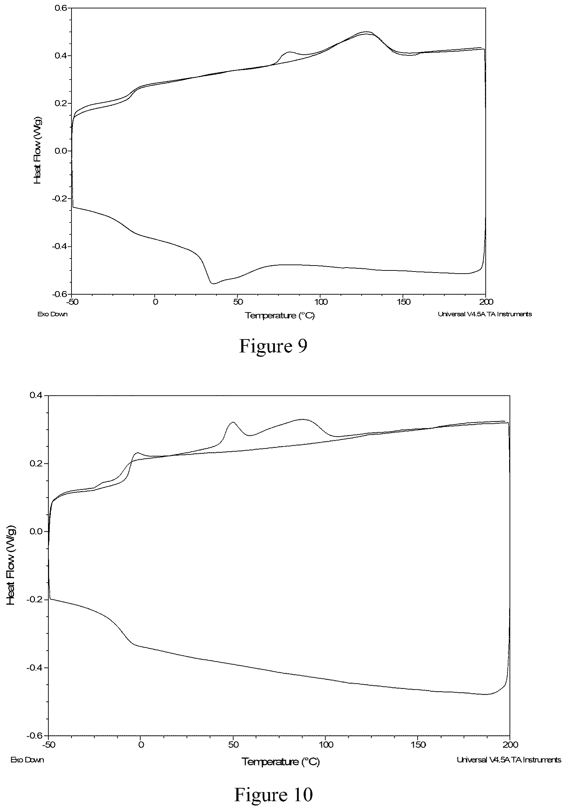

Figure 9 is a DSC spectrum of the PBST copolyester obtained in Comparative Example 3;
Figure 10 is a DSC spectrum of the PBSF copolyester obtained in Comparative Example 4;

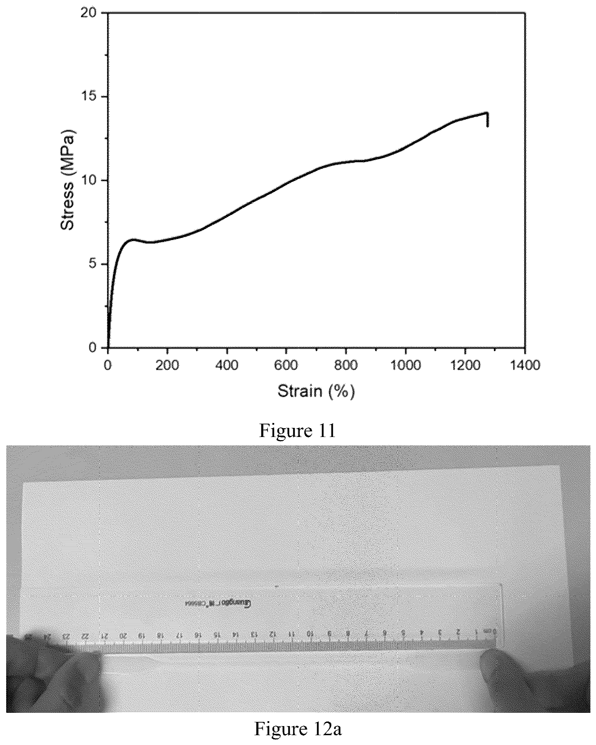

Figure 11 is a stress-strain curve of the PBSF copolyester obtained in Comparative Example 4;

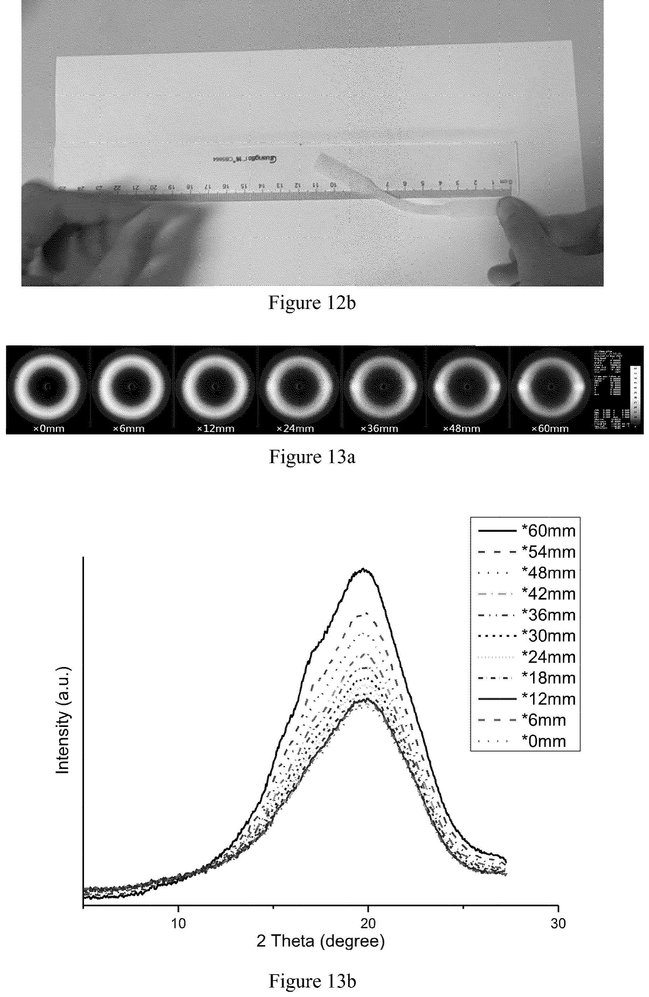

Figure 12 shows a before-and-after comparison of the tensile resilience performance of a sample strip of the furan ring-containing polyester elastomer obtained in Example 1: (a) a photo of the strip before rebound, and (b) a photo of the strip after rebound;
Figure 13 shows a two-dimensional X-ray diffraction pattern (a) and a corresponding one-dimensional XRD pattern (b) of Example 1 at different stretch factors;
Figure 14 shows a comparison of XRD patterns of the example and comparative example samples.

## Detailed description

The present invention is described in detail below in conjunction with specific embodiments. It is necessary to point out that the following examples are only used to further illustrate the present invention and cannot be understood as limiting the scope of protection of the present invention. Some non-essential improvements and adjustments to the present invention made by those skilled in the art based on the contents of the present invention still fall within the scope of protection of the present invention.

This application discloses the following technical solutions:

1. A furan ring-containing polyester elastomer, which comprises:

(F) a structural unit derived from furandicarboxylic acid and/or ester thereof;
(T) a structural unit derived from aromatic dibasic acid and/or aromatic dibasic ester;
(S) a structural unit derived from aliphatic dibasic acid;
(D) a structural unit derived from aliphatic dihydric alcohol;

wherein the furan ring-containing polyester elastomer includes the following structural unit combinations:

SDS, representing a structural unit derived from aliphatic dihydric alcohol (e.g. butylene glycol), the dibasic acids adjacent to two ends of which are both structural units derived from aliphatic dibasic acid (e.g. succinic acid);
TDT, representing a structural unit derived from aliphatic dihydric alcohol (e.g. butylene glycol), the dibasic acids adjacent to two ends of which are both structural units derived from aromatic dibasic acid and/or aromatic dibasic ester (e.g. terephthalic acid);
FDF, representing a structural unit derived from aliphatic dihydric alcohol (e.g. butylene glycol), the dibasic acids adjacent to two ends of which are both structural units derived from furandicarboxylic acid and/or ester thereof (e.g. furandicarboxylic acid);
SDT/TDS: representing a structural unit derived from aliphatic dihydric alcohol (e.g. butylene glycol), the dibasic acids adjacent to two ends of which are a structural unit derived from aliphatic dibasic acid (e.g. succinic acid) at one end and a structural unit derived from aromatic dibasic acid and/or aromatic dibasic ester (e.g. terephthalic acid) at the other end;
SDF/FDS: representing a structural unit derived from aliphatic dihydric alcohol (e.g. butylene glycol), the dibasic acids adjacent to two ends of which are a structural unit derived from aliphatic dibasic acid (e.g. succinic acid) at one end and a structural unit derived from furandicarboxylic acid and/or ester thereof (e.g. furandicarboxylic acid) at the other end;
TDF/FDT: representing a structural unit derived from aliphatic dihydric alcohol (e.g. butylene glycol), the dibasic acids adjacent to two ends of which are a structural unit derived from aromatic dibasic acid and/or aromatic dibasic ester (e.g. terephthalic acid) at one end and a structural unit derived from furandicarboxylic acid and/or ester thereof (e.g. furandicarboxylic acid) at the other end;
wherein on the basis that the total amount of the structural unit combinations SDS, TDT, FDF, SDT/TDS, SDF/FDS and TDF/FDT is 100 mol%,
the amount of the structural unit combination SDS is 21-28mol%;
the amount of the structural unit combination TDT is 2-9mol%;
the amount of the structural unit combination FDF is 6-15mol%;
the amount of the structural unit combination SDT/TDS is 13-28mol%;
the amount of the structural unit combination SDF/FDS is 22-38mol%; and
the amount of the structural unit combination TDF/FDT is 9-14mol%;
preferably,
the amount of the structural unit combination SDS is 23-26mol%;
the amount of the structural unit combination TDT is 2-8mol%;
the amount of the structural unit combination FDF is 6-14mol%;
the amount of the structural unit combination SDT/TDS is 13-26mol%;
the amount of the structural unit combination SDF/FDS is 23-37mol%; and
the amount of the structural unit combination TDF/FDT is 9-13mol%;
more preferably,
the amount of the structural unit combination SDS is 23-26mol%;
the amount of the structural unit combination TDT is 2-8mol%;
the amount of the structural unit combination FDF is 6-14mol%;
the amount of the structural unit combination SDT/TDS is 14-26mol%;
the amount of the structural unit combination SDF/FDS is 24-36mol%; and
the amount of the structural unit combination TDF/FDT is 10-13mol%.

2. The furan ring-containing polyester elastomer according to technical solution 1, comprising a reaction product of component (a) furandicarboxylic acid and/or ester thereof, component (b) aromatic dibasic acid and/or aromatic dibasic ester, component (c) aliphatic dibasic acid and component (d) aliphatic dihydric alcoholdihydric alcohol;

the ratio of the total amount by mole of component (a) and component (b) to the amount by mole of component (c) is 1:(0.9-1.05), e.g. 1:(0.95-1.02), or 1:(0.96-1.01);

the molar ratio of component (a) to component (b) is 1:(0.4-1.8), preferably 1:(0.4-1.2).

3. A furan ring-containing polyester elastomer, comprising a reaction product of component (a) furandicarboxylic acid and/or ester thereof, component (b) aromatic dibasic acid and/or aromatic dibasic ester, component (c) aliphatic dibasic acid and component (d) aliphatic dihydric alcohol;

the ratio of the total amount by mole of component (a) and component (b) to the amount by mole of component (c) is 1:(0.9-1.05), e.g. 1:(0.95-1.02), or 1:(0.96-1.01);
the molar ratio of component (a) to component (b) is 1:(0.4-1.8), preferably 1:(0.4-1.2).

4. The furan ring-containing polyester elastomer according to any one of the preceding technical solutions 1-3, characterized in that in the determination of tensile properties according to GB/T 1040.1-2018, the elongation to break is >1500%, preferably >1600%.

5. The furan ring-containing polyester elastomer according to any one of the preceding technical solutions 1-4, characterized in that the elastic recovery rate is greater than 70%.

6. The furan ring-containing polyester elastomer according to any one of the preceding technical solutions 1-5, characterized in that the weight average molecular weight is greater than 60,000, and the molecular weight distribution is 1.6-2.3; preferably, the weight average molecular weight is greater than 100,000, and the molecular weight distribution is 1.6-2.0.

7. The furan ring-containing polyester elastomer according to any one of the preceding technical solutions 1-6, characterized in that the average elastic recovery rate is not less than 80%.

8. The furan ring-containing polyester elastomer according to any one of the preceding technical solutions 1-7, characterized in that having an elastic self-enhancement ability, preferably, when the stretch ratio is 500% or higher, the elastic recovery rate is greater than 85%, and when the stretch ratio is 800% or higher, the elastic recovery rate is greater than 90%.

9. The furan ring-containing polyester elastomer according to any one of the preceding technical solutions 1-8, characterized in that the weight-average molecular weight is $9\text{-}15\times10^4$, the number-average molecular weight is $5\text{-}10\times10^4$, the molecular weight distribution is 1.6-2.3, the weight-average molecular weight$\times$the number-average molecular weight is $50\text{-}120\times10^8$; preferably, the weight-average molecular weight is $10\text{-}14\times10^4$, the number-average molecular weight is $5\text{-}9\times10^4$, the molecular weight distribution is 1.6-2.0, the weight-average molecular weight$\times$the number-average molecular weight is $60\text{-}110\times10^8$.

10. The furan ring-containing polyester elastomer according to any one of the preceding technical solutions 1-9, characterized in that in the determination of tensile properties according to GB/T 1040.1-2018, the tensile modulus is 8-75 MPa, e.g. 10-75 MPa, 8-25 MPa, 10-16 MPa.

11. The furan ring-containing polyester elastomer according to any one of the preceding technical solutions 1-10, characterized in that in the determination of tensile properties according to GB/T 1040.1-2018, the tensile strength at break is 3-20 MPa, e.g. 4-20 MPa, 3-8 MPa, or 4-6 MPa.

12. The furan ring-containing polyester elastomer according to any one of the preceding technical solutions 1-11, characterized in that in the determination of tensile properties according to GB/T 1040.1-2018, there is no yield phenomenon.

13. The furan ring-containing polyester elastomer according to any one of the preceding technical solutions 1-12, characterized in that the furandicarboxylic acid and/or ester thereof is at least one of 2,5-furandicarboxylic acid, dimethyl 2,5-furandicarboxylate, and diethyl 2,5-furandicarboxylate; and/or,

the aromatic dibasic acid and/or aromatic dibasic ester is selected from $C_8\text{-}C_{18}$ aromatic dibasic acid or aromatic dibasic ester compounds, preferably at least one of terephthalic acid, terephthalic acid ester, isophthalic acid, and isophthalic acid ester; and/or,
the aliphatic dibasic acid is at least one of $C_2\text{-}C_{18}$ aliphatic dibasic acids, preferably at least one of sebacic acid, succinic acid, and adipic acid; and/or,
the aliphatic dihydric alcohol is at least one of $C_2\text{-}C_8$ dihydric alcohols, preferably at least one of ethylene glycol, 1,3-propylene glycol, 1,4-butylene glycol, 2-methyl-1,3-propylene glycol, and neopentyl glycol.

14. A process for preparing the furan ring-containing polyester elastomer according to any one of technical solutions 1-13, comprising: subjecting component (a) furandicarboxylic acid and/or ester thereof, component (b) aromatic dibasic acid and/or aromatic dibasic ester, component (c) aliphatic dibasic acid, component (d) aliphatic dihydric alcohol to esterification reaction, pre-polycondensation reaction, and final polycondensation reaction in sequence to produce the furan ring-containing polyester elastomer.

15. The preparation process according to technical solution 14, characterized in that the preparation process specifically comprises the following steps:

(1) subjecting component (a), component (b), component (c) and component (d) to an esterification reaction under the action of a first catalyst;
(2) when the esterification rate reaches 92-98%, a pre-polycondensation reaction is carried out under the action of a second catalyst;
(3) subjecting the reaction system obtained in step (2) to a final polycondensation reaction to produce the furan ring-containing polyester elastomer.

16. The preparation process according to any one of technical solutions 14-15, characterized in that:

the component (a) is at least one of 2,5-furandicarboxylic acid, dimethyl 2,5-furandicarboxylate, diethyl 2,5-furandicarboxylate; and/or,
the component (b) is selected from $C_8$-$C_{18}$ aromatic dibasic acid or aromatic dibasic ester compounds, preferably at least one of terephthalic acid, terephthalic acid ester, isophthalic acid, and isophthalic acid ester; and/or,
the component (c) is at least one of $C_2$-$C_{18}$ aliphatic dibasic acids, preferably at least one of sebacic acid, succinic acid, and adipic acid; and/or,
the component (d) is at least one of $C_2$-$C_8$ dihydric alcohols, preferably at least one of ethylene glycol, 1,3-propylene glycol, 1,4-butylene glycol, 2-methyl-1,3-propylene glycol, and neopentyl glycol; and/or,
the first catalyst includes an organic titanium compound and at least one compound containing antimony, germanium, zirconium, stannum, magnesium, cobalt, aluminium or zinc, preferably includes an organic titanium compound and at least one organic stannum compound; and/or,
the second catalyst is at least one of lanthanide series metal compounds, preferably at least one of lanthanum chloride, lanthanum acetylacetonate, neodymium isopropoxide, and lanthanum stearate.

17. The preparation process according to any one of technical solutions 14-16, characterized in that:

the organic titanium compound is selected from butyl titanate, tetra-n-propyl titanate, tetra-isopropyl titanate, tetraethyl titanate, and titanium glycolate; and/or,
the organic stannum compound is at least one of stannous octoate, stannous oxalate, dibutyltin oxide, butyltinhydroxide-oxide, dibutyltin diacetate, dioctyltin oxide, and butyltin tris(2-ethylhexanoate); and/or,
based on 100 parts by weight of the total amount of the first catalyst, the organic titanium compound comprises 45-85 parts, e.g. 55-75 parts or 75-85 parts; the organic stannum compound comprises 15-55 parts, e.g. 25-45 parts or 15-25 parts.

18. The preparation process according to any one of technical solutions 14-17, characterized in that in step (1):

the ratio of the total amount by mole of component (a), component (b) and component (c) to the amount by mole of component (d) is 1:(1.05-4), preferably 1:(1.2-2); and/or,
the ratio of the total amount by mole of component (a) and component (b) to the amount by mole of component (c) is 1:(0.9-1.05), e.g. 1:(0.95-1.02), or 1:(0.96-1.01);
the molar ratio of component (a) to component (b) is 1:(0.4-1.8), preferably 1:(0.4-1.2);
the used amount of the first catalyst is 0.01-1%, e.g. 0.1-0.3% or 0.05-0.2% by weight of the total of component (a), component (b) and component (c); and/or,
the conditions of the esterification reaction are as follows: the esterification temperature is 130-210°C, e.g. 150-190°C; the reaction time is 1-5 hours, e.g. 2-3 hours; the reaction atmosphere is a protective gas.

19. The preparation process according to any one of technical solutions 14-18, characterized in that in step (2):

the used amount of the second catalyst is 0.01-0.5%, preferably 0.05-0.2% by weight of the total of component (a), component (b) and component (c); and/or,
the conditions of the pre-polycondensation reaction are as follows: the reaction temperature is 150-220°C, e.g. 190-210°C; and/or, the reaction time is 0.5-2.5 hours, e.g. 1-1.5 hours; and/or, the vacuum degree is 600-5000Pa, e.g. 1000-2000Pa.

20. The preparation process according to any one of technical solutions 14-19, characterized in that in step (3), the conditions of the final polycondensation reaction are as follows:

the reaction temperature is 210-260°C, e.g. 230-250°C; and/or,
the reaction time is 1-5 hours, e.g. 2-4 hours; and/or,
the vacuum degree is≤300Pa, e.g.≤150Pa, or≤50Pa.

21. Use of the furan ring-containing polyester elastomer according to any one of technical solutions 1-13 or the furan ring-containing polyester elastomer obtained by the preparation process according to any one of technical solutions 14-20 in biodegradable materials.

Definitions:

(1) Elastic recovery rate:
Specimens are made into dumbbell shapes with a neck having a width of 6 mm and a thickness of 0.5 mm. At room temperature, the specimen strain is fixed at 300%. A specimen is stretched to 300% at a rate of 100 $\mu$m/s each time and then returned to zero stress at the same rate. The stretching is repeated 10 times. The recovery rate is calculated according to the following formula, and the final result is the average value of each group of specimens.

$$R = \frac{\varepsilon_m - \varepsilon_p(N)}{\varepsilon_m - \varepsilon_p(N-1)}$$

wherein $\varepsilon_m$ is the maximum deformation in each stretching, $\varepsilon_p(N)$ is the deformation of the specimen returning to zero stress after the Nth stretching, and $\varepsilon_p(N-1)$ is the deformation of the specimen returning to zero stress after the (N-1)th stretching.
(2) Weight-average molecular weight (Mw), number-average molecular weight (Mn) and molecular weight distribution (Mw/Mn) are measured and calculated according to GB/T 36214.
(3) Tensile modulus (E), tensile strength at break ($\sigma$b), elongation to break ($\varepsilon$b), and yield stress (also known as yield strength, $\sigma$s) are calculated according to the method specified in GB/T 1040.1-2018.

Test methods and test conditions used in the present invention are as follows:

GPC test: The molecular weight and molecular weight distribution of two raw materials are characterized using a PL-GPC220 gel chromatography instrument from Polymer Laboratories, UK.
NMR test: $^1$H NMR is performed on a Bruker AMX300 Fourier transform NMR spectrometer with deuterated chloroform (CDCl$_3$) as solvent and tetramethylsilane (TMS) as internal standard at a resonance frequency of 300 MHz.

Mechanical properties:

A sample for the tensile and rebound test is prepared by compression molding using a CARVER-4533 press from CARVER, USA. The compression molding temperature is 200°C, and a melt is kept at 5 MPa for 6 min and then quenched in an ice water bath.
A tensile and rebound test is carried out using the INSTRON-5965 tension meter of INSTRON Company of the United States. The stretching rate is 50 mm/min, and each component is tested 5 times.
The yield stress and the elongation at break are calculated according to the method specified in GB/T 1040.1-2018.
Elastic recovery test: the strain is fixed at 200% or 300%; a specimen is stretched to 200% or 300% at a rate of 100 $\mu$m/s each time and then returned to zero stress at the same rate; and the stretching is repeated 10 times.
Incremental elastic recovery test: a specimen is stretched to 100% for the first time and then returned to zero stress at the same rate; for the second time, stretched to 200% and then returned to zero stress at the same rate; for the third time, stretched to 300% and then returned to zero stress at the same rate; this process is not stopped until the 14th stretching cycle is finished.
The raw materials used in the examples and comparative examples, unless otherwise specified, are known in the prior art, for example, they can be directly purchased or prepared according to the preparation methods disclosed in the prior art.

Example 1

156g of 2,5-furandicarboxylic acid, 166g of terephthalic acid, 236g of succinic acid, and 540g of 1,4-butylene glycol were added to a reactor to form a slurry, and 0.6g of tetra-isopropyl titanate, 0.2g of stannous octoate, and 0.5 g of lanthanum acetylacetonate were added. In the presence of a nitrogen atmosphere, the temperature was gradually increased to 190°C to carry out an esterification reaction. When the esterification rate reached 98%, a pre-polycondensation reaction was started, and vacuum reaction conditions were gradually established. The pressure was reduced to 1kPa and the temperature was gradually increased to 210°C. After reacting for 1.5 hours, a polycondensation reaction was started. The vacuum degree was controlled below 150 Pa and the reaction was carried out at 245°C for 3 hours to finally produce a copolyester (denoted as PBSTF-3). GPC test showed that the PBSTF-3 copolyester had an Mn of $8.0 \times 10^4$, an Mw of $13.2 \times 10^4$, and a molecular weight distribution of 1.66.

DSC test: The temperature corresponding to 5% weight loss of PBSTF-3 copolyester in $N_2$ atmosphere was 353°C, and the thermal decomposition temperature was 400°C.

Nuclear magnetic resonance test showed that in the PBSTF-3 copolyester, the molar ratio of succinic acid:terephthalic acid:furandicarboxylic acid was 49.7:25.2:25.1, and this composition was consistent with the feeding ratio.

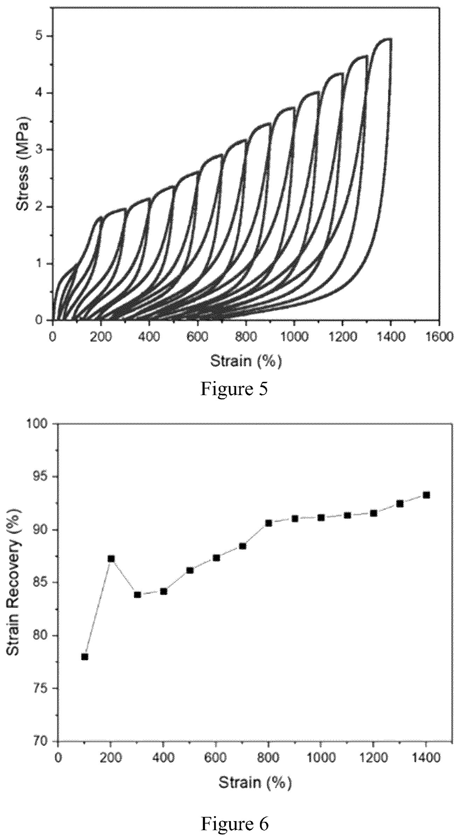

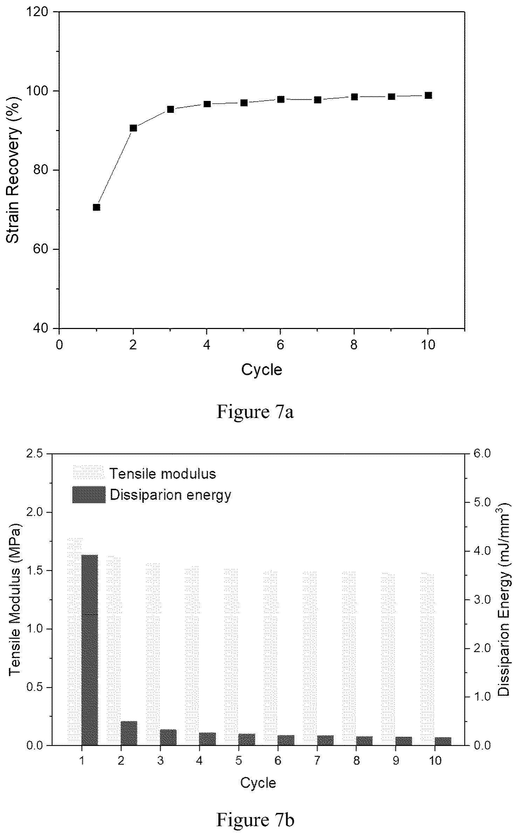

The test of tensile properties showed that the PBSTF-3 copolyester had a tensile modulus of 15.2MPa, a tensile strength at break of 4.1MPa, and an elongation at break of >1700%. The elastic recovery rate after the first stretching was more than 70%, and there was no yield phenomenon, which proves that the sample had the characteristics of an elastomer, and the average elastic recovery rate was about 90%. As the strain increased, the stress continued to increase, the hysteresis loop area enclosed by the stress-strain curve gradually increased, and the tensile modulus and the dissipation energy gradually increased too. The hysteresis loop of single cycle recovery was relatively small, indicating that the stretching energy dissipation was relatively small. As shown in Figure 6, as the strain increased to 1400%, the elastic recovery rate still gradually increased, indicating that it had elasticity self-enhancement effect. As shown in Figure 7, during continuous stretching cycles, the dissipation energy gradually stabilized to a lower value, showing good fatigue resistance.

The hysteresis loop of the first cycle curve was significantly larger than those of subsequent cycle curves, indicating that the sample underwent permanent deformation after the first stretching, likely due to significant changes in its internal condensed-state structure. In contrast, the hysteresis loop's area of the subsequent cyclic stretching varied minimally, suggesting little change in elastic recovery rate and implying that the sample's structure remained stable thereafter.

The two-dimensional X-ray diffraction patterns at different stretching factors showed that the orientation structure of the polymer chain became ordered and crystallized as the stretching factor increased. As the stretching factor increased, the intensity of the diffraction peaks increased, and the formation of crystalline micro-regions would cause the overall cross-linked network to become denser, providing physical cross-linking points for the elastomer and a self-enhancement performance for the elastic resilience.

Example 2

218.4g of 2,5-furandicarboxylic acid, 99.6g of terephthalic acid, 236g of succinic acid, and 540g of 1,4-butylene glycol were added to a reactor to form a slurry, and 1.0g of tetra-n-butyl titanate, 0.5g of lanthanum chloride, and 0.2g of stannous octoate were added. In the presence of a nitrogen atmosphere, the temperature was gradually increased to 190°C to carry out an esterification reaction. When the esterification rate reached 98%, a pre-polycondensation reaction was started, and vacuum reaction conditions were gradually established. The pressure was reduced to 1kPa and the temperature was gradually increased to 210°C. After reacting for 1.5 hours, a polycondensation reaction was started. The vacuum degree was controlled below 150 Pa and the reaction was carried out at 245°C for 3 hours to finally produce a copolyester, denoted as PBSTF-4. GPC test showed that the PBSTF-4 copolyester had an Mn of $6.0 \times 10^4$, an Mw of $10.1 \times 10^4$, and a molecular weight distribution of 1.71.

Nuclear magnetic resonance test showed that in the PBSTF-4 copolyester, the molar ratio of succinic acid:terephthalic acid:furandicarboxylic acid was 49.7:15.1:35.2, and this composition was consistent with the feeding ratio.

The test of tensile properties showed that the PBSTF-4 copolyester had a tensile modulus of 13.7MPa, a tensile strength at break of 4.9MPa, and an elongation at break of >1600%. The elastic recovery rate after the first stretching was more than 70%, the average elastic recovery rate was about 85%, and there was no yield phenomenon, which proves that the sample had the characteristics of an elastomer.

Example 3

184g of dimethyl 2,5-furandicarboxylate, 166g of terephthalic acid, 292.3g of adipic acid, and 540g of 1,4-butylene glycol were added to a reactor to form a slurry, and 1.0g of tetra-n-propyl titanate, 0.5g of lanthanum chloride, and 0.2g of stannous octoate were added. In the presence of a nitrogen atmosphere, the temperature was gradually increased to 190°C to carry out an esterification reaction. When the esterification rate reached 98%, a pre-polycondensation reaction was started, and vacuum reaction conditions were gradually established. The pressure was reduced to 1kPa and the temperature was gradually increased to 210°C. After reacting for 1.5 hours, a polycondensation reaction was started. The vacuum degree was controlled below 150 Pa and the reaction was carried out at 245°C for 3 hours to finally produce a copolyester, denoted as PBATF.

GPC test showed that the PBATF copolyester had an Mn of $6.3 \times 10^4$, an Mw of $11 \times 10^4$, and a molecular weight distribution of 1.85.

Nuclear magnetic resonance test showed that in the PBATF copolyester, the molar ratio of adipic acid:terephthalic acid:furandicarboxylic acid was 49.1:25.4:25.5, and this composition was consistent with the feeding ratio.

The test of tensile properties showed that the PBATF copolyester had a tensile modulus of 12.1MPa, a tensile strength at break of 5.3MPa, and an elongation at break of >1600%. The elastic recovery rate after the first stretching was more than 70%, the average elastic recovery rate was about 80%, and there was no yield phenomenon, which proves that the sample had the characteristics of an elastomer.

Comparative Example 1

31.2g of 2,5-furandicarboxylic acid, 299g of terephthalic acid, 236g of succinic acid, and 540g of 1,4-butylene glycol were added to a reactor to form a slurry, and 0.6g of tetra-n-butyl titanate, 0.2g of dibutyltin oxide, and 0.5g of lanthanum acetylacetonate were added. In the presence of a nitrogen atmosphere, the temperature was gradually increased to 190°C to carry out an esterification reaction. When the esterification rate reached 98%, a pre-polycondensation reaction was started, and vacuum reaction conditions were gradually established. The pressure was reduced to 1kPa and the temperature was gradually increased to 210°C. After reacting for 1.5 hours, a polycondensation reaction was started. The vacuum degree was controlled below 150 Pa and the reaction was carried out at 245°C for 3 hours to finally produce a copolyester, denoted as PBSTF-1.

GPC test showed that the PBSTF-1 copolyester had an Mn of $9.2 \times 10^4$, an Mw of $16.4 \times 10^4$, and a molecular weight distribution of 1.76. The temperature corresponding to 5% weight loss in $N_2$ atmosphere was 360°C, and the thermal decomposition temperature was 406°C. Nuclear magnetic resonance test showed that in the PBSTF-1 copolyester, the molar ratio of succinic acid:terephthalic acid:furandicarboxylic acid was 49.7:45.3:5.0, and this composition was consistent with the feeding ratio. The test of tensile properties showed that the PBSTF-1 copolyester had a tensile modulus of 71.1MPa, a tensile strength at break of 18.5MPa, an elongation at break of >1328%, and a yield strength of 8.5MPa. It had no excellent elasticity and resilience performance.

Comparative Example 2

110.4g of dimethyl 2,5-furandicarboxylate, 232.4g of terephthalic acid, 236g of succinic acid, and 540g of 1,4-butylene glycol were added to a reactor to form a slurry, and 0.6g of tetra-n-butyl titanate, 0.2g of dibutyltin oxide, and 0.5g of lanthanum acetylacetonate were added. In the presence of a nitrogen atmosphere, the temperature was gradually increased to 190°C to carry out an esterification reaction. When the esterification rate reached 98%, a pre-polycondensation reaction was started, and vacuum reaction conditions were gradually established. The pressure was reduced to 1kPa and the temperature was gradually increased to 210°C. After reacting for 1.5 hours, a polycondensation reaction was started. The vacuum degree was controlled below 150 Pa and the reaction was carried out at 245°C for 3 hours to finally produce a copolyester, denoted as PBSTF-2.

GPC test showed that the PBSTF-2 copolyester had an Mn of $5.1 \times 10^4$, an Mw of $12.6 \times 10^4$, and a molecular weight distribution of 2.25. Nuclear magnetic resonance test showed that in the PBSTF-2 copolyester, the molar ratio of succinic acid:terephthalic acid:furandicarboxylic acid was 48.7:36.1:15.2, and this composition was consistent with the feeding ratio. The test of tensile properties showed that the PBSTF-2 copolyester had a tensile modulus of 29.2MPa, a tensile strength at break of 8.2MPa, an elongation at break of >1352%, and a yield strength of 4.6MPa. It had no excellent elasticity and resilience performance.

Comparative Example 3

424g of terephthalic acid, 330g of succinic acid, and 650g of 1,4-butylene glycol were added to a reactor to form a slurry, and 0.4g of tetra-isopropyl titanate, 0.2g of dibutyltin oxide, and 0.9g of lanthanum acetylacetonate were added. In the presence of a nitrogen atmosphere, the temperature was gradually increased to 220°C to carry out an esterification reaction. When the esterification rate reached 98%, a pre-polycondensation reaction was started, and vacuum reaction conditions were gradually established. The pressure was reduced to 1kPa and the temperature was gradually increased to 230°C. After reacting for 2 hours, a polycondensation reaction was started. The vacuum degree was controlled below 150 Pa and the reaction was carried out at 250°C for 5 hours to finally produce a copolyester, denoted as PBST.

GPC test showed that the PBST copolyester had an Mn of $5.4 \times 10^4$, an Mw of $9.3 \times 10^4$, and a molecular weight distribution of 1.72. The test of tensile properties showed that the PBST copolyester had a tensile modulus of 94.6MPa, an elongation at break of >602%, and a yield strength of 10.0MPa. It had no elasticity and resilience performance.

Comparative Example 4

436g of 2,5-furandicarboxylic acid, 330g of succinic acid, and 650g of 1,4-butylene glycol were added to a reactor to form a slurry, and 0.4g of tetra-isopropyl titanate, 0.2g of dioctyltin oxide, and 0.9g of lanthanum acetylacetonate were added. In the presence of a nitrogen atmosphere, the temperature was gradually increased to 191°C to carry out an esterification reaction. When the esterification rate reached 98%, a pre-polycondensation reaction was started, and vacuum reaction conditions were gradually established. The pressure was reduced to 1kPa and the temperature was gradually increased to 200°C. After reacting for 2 hours, a polycondensation reaction was started. The vacuum degree was controlled below 150 Pa and the reaction was carried out at 235°C for 5 hours to finally produce a copolyester, denoted as PBSF. GPC test showed that the PBSF copolyester had an Mn of $6.9 \times 10^4$, an Mw of $11.9 \times 10^4$, and a molecular weight distribution of 1.71. The test of tensile properties showed that the PBSF copolyester had a tensile modulus of 31.1MPa, an elongation at break of >1138%. Mechanical test showed a slight yield phenomenon, with a yield strength of 2.2MPa, close to that of elastomeric materials, and an elastic recovery rate of less than 50%.

Test Example

Characterization of sequence structures in furan ring-containing polyester elastomers
$^1$H NMR experiments were performed on an Agilent 600 MHz DD2 nuclear magnetic resonance apparatus, the solvent was $CDCl_3$, the sample concentration was about 35% w/v, and the test temperature was room temperature. The latency time of the hydrogen spectrum was 10 seconds, the pulse was 45°, and the sampling number was 16.

The peaks at 1.60-2.10 ppm in the hydrogen spectrum correspond to the proton peaks of the two middle methylene groups in the butylene glycol unit, while the peaks at 4.00-4.50 ppm correspond to the proton peaks of the two methylene groups adjacent to the oxygen atoms in the butylene glycol unit. The splitting occurs due to the different dicarboxylic acids adjacent to the butylene glycol. The sequence distribution is calculated based on the areas of the split peaks at 1.60-2.10ppm and 4.00-4.50ppm. The peak area at 1.71ppm corresponds to the SS sequence, the peak area at 1.98ppm corresponds to the TT sequence, the peak area at 1.92ppm corresponds to the FF sequence, the peak area at 1.93-1.97ppm corresponds to the TF/FT sequence, and the peak area at 4.07-4.20ppm corresponds to the ST, SF and SS sequences. The Dmfit software is used to perform peak fitting in this region to obtain the peak areas of ST, SF and SS. The peak area of SS corresponds to the SS sequence. The peak areas of ST and SF are multiplied by 2 to correspond the ST/TS and SF/FS sequences, respectively. The percentages of different binary segment sequence structures can be obtained by dividing the corresponding peak area of each sequence by the sum of the peak areas of all sequences, wherein SS represents the dibasic acids adjacent to two ends of butylene glycol are both succinic acid; TT represents the dibasic acids adjacent to two ends of butylene glycol are both terephthalic acid; FF represents the dibasic acids adjacent to two ends of butylene glycol are both furandicarboxylic acid; ST/TS represents the dibasic acids adjacent to two ends of butylene glycol are succinic acid at one end and terephthalic acid at the other end; SF/FS represents the dibasic acids adjacent to two ends of butylene glycol are succinic acid at one end and furandicarboxylic acid at the other end; TF/FT represents the dibasic acids adjacent to two ends of butylene glycol are terephthalic acid at one end and furandicarboxylic acid at the other end.

The results for percentages of the binary segment sequence structures in the furan ring-containing polyester elastomers prepared in examples and comparative examples are shown in Table 1.

Table 1. Percentages of different binary segment sequence structures in examples and comparative examples

| Test Example | Sample name | SS | TT | FF | ST/TS | SF/FS | TF/FT |
|---|---|---|---|---|---|---|---|
| Comparative Example 1 | PBSTF-1 | 24.0 | 21.6 | 0.4 | 43.6 | 5.3 | 5.1 |
| Comparative Example 2 | PBSTF-2 | 24.4 | 13.4 | 2.9 | 34.1 | 14.7 | 10.4 |
| Example 1 | PBSTF--3 | 24.4 | 7.3 | 6.9 | 24.6 | 24.5 | 12.2 |
| Example 2 | PBSTF-4 | 24.7 | 3.0 | 12.9 | 14.6 | 34.4 | 10.4 |

Table 2 shows the mechanical properties of the copolyesters prepared in Examples 1-2 and Comparative Examples 1-4.

Table 2. Comparison of mechanical data of samples in Examples 1-2 and Comparative Examples 1-4

| Test Example | Sample name | E (MPa) | $\sigma_b$ (MPa) | $\varepsilon_b$ (%) | $\sigma_s$ (MPa) |
|---|---|---|---|---|---|
| Comparative Example 3 | PBST | 94.6 | 9.8 | 602 | 10.0 |
| Comparative Example 1 | PBSTF-1 | 71.1 | 18.5 | 1328 | 8.5 |
| Comparative Example 2 | PBSTF-2 | 29.2 | 8.23 | 1352 | 4.6 |
| Example 1 | PBSTF-3 | 15.2 | 4.1 | >1700 | - |
| Example 2 | PBSTF-4 | 13.7 | 4.9 | 1628 | - |
| Example 3 | PBATF | 12.1 | 5.3 | 1601 | - |
| Comparative Example 4 | PBSF | 31.1 | 12.7 | 1138 | 2.2 |

wherein E: tensile modulus; $\sigma_b$: tensile strength at break; $\varepsilon_b$: elongation to break; $\sigma_s$: yield strength

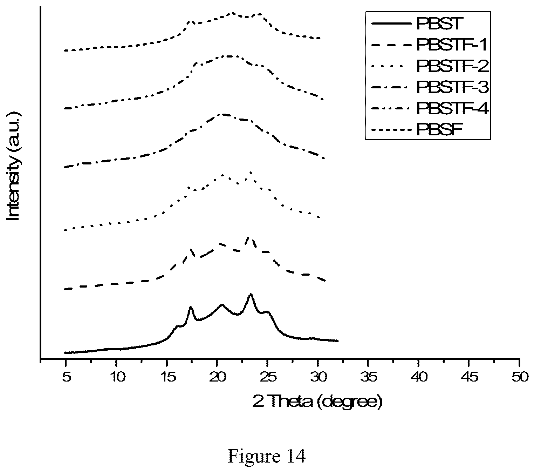

As shown in the XRD comparison data of Figure 14 for examples and comparative examples, the introduction of the fourth monomer, furandicarboxylic acid-based compound, in the present invention changes the crystallinity of PBST. With the increasing amount of the furandicarboxylic acid-based compound, the crystalline peaks of PBST first gradually weaken and then strengthen, accompanied by significant changes in thermodynamic properties. This indicates that the rigid furan-based polyester chain segments generated in the system disturb the structure and crystalline arrangement of the PBST polymer chains. The sequence structure data of the copolymers in Table 1 show that after the addition of the furandicarboxylic acid-based compound, a certain proportion of furan-based and aromatic-based units are linked to form two-component units FT/TF, which affects the molecular chain arrangement and regularity of the polymer PBST, thereby influencing its crystallinity. The arrangement of the polymer sequence structure directly influences the various performance characteristics of the polymer material during use. In the present invention, only when the four component units are present in a specific ratio does the product exhibit non-crystalline (or weakly crystalline) behavior in an unstretched state and induced crystallinity upon stretching. This provides the material with excellent chain entanglement and crystalline micro-regions as physical crosslinking point, endowing the material with elastomeric properties, superior resilience, outstanding fatigue resistance, and elasticity self-enhancement effect.

## Claims

1. A furan ring-containing polyester elastomer, which comprises:

   (F) a structural unit derived from furandicarboxylic acid and/or ester thereof;
   (T) a structural unit derived from aromatic dibasic acid and/or aromatic dibasic ester;
   (S) a structural unit derived from aliphatic dibasic acid;
   (D) a structural unit derived from aliphatic dihydric alcohol;

   wherein the furan ring-containing polyester elastomer includes the following structural unit combinations:

   SDS, representing a structural unit derived from aliphatic dihydric alcohol (e.g. butylene glycol), the dibasic acids adjacent to two ends of which are both structural units derived from aliphatic dibasic acid (e.g. succinic acid);
   TDT, representing a structural unit derived from aliphatic dihydric alcohol (e.g. butylene glycol), the dibasic acids adjacent to two ends of which are both structural units derived from aromatic dibasic acid and/or aromatic dibasic ester (e.g. terephthalic acid);
   FDF, representing a structural unit derived from aliphatic dihydric alcohol (e.g. butylene glycol), the dibasic acids adjacent to two ends of which are both structural units derived from furandicarboxylic acid and/or ester thereof (e.g. furandicarboxylic acid);
   SDT/TDS: representing a structural unit derived from aliphatic dihydric alcohol (e.g. butylene glycol), the dibasic acids adjacent to two ends of which are a structural unit derived from aliphatic dibasic acid (e.g. succinic acid) at one end and a structural unit derived from aromatic dibasic acid and/or aromatic dibasic ester (e.g. terephthalic acid) at the other end;
   SDF/FDS: representing a structural unit derived from aliphatic dihydric alcohol (e.g. butylene glycol), the dibasic acids adjacent to two ends of which are a structural unit derived from aliphatic dibasic acid (e.g. succinic acid) at one end and a structural unit derived from furandicarboxylic acid and/or ester thereof (e.g. furandicarboxylic acid) at the other end;

TDF/FDT: representing a structural unit derived from aliphatic dihydric alcohol (e.g. butylene glycol), the dibasic acids adjacent to two ends of which are a structural unit derived from aromatic dibasic acid and/or aromatic dibasic ester (e.g. terephthalic acid) at one end and a structural unit derived from furandicarboxylic acid and/or ester thereof (e.g. furandicarboxylic acid) at the other end;

wherein on the basis that the total amount of the structural unit combinations SDS, TDT, FDF, SDT/TDS, SDF/FDS and TDF/FDT is 100 mol%,

the amount of the structural unit combination SDS is 21-28mol%;

the amount of the structural unit combination TDT is 2-9mol%;

the amount of the structural unit combination FDF is 6-15mol%;

the amount of the structural unit combination SDT/TDS is 13-28mol%;

the amount of the structural unit combination SDF/FDS is 22-38mol%; and

the amount of the structural unit combination TDF/FDT is 9-14mol%;

preferably,

the amount of the structural unit combination SDS is 23-26mol%;

the amount of the structural unit combination TDT is 2-8mol%;

the amount of the structural unit combination FDF is 6-14mol%;

the amount of the structural unit combination SDT/TDS is 13-26mol%;

the amount of the structural unit combination SDF/FDS is 23-37mol%; and

the amount of the structural unit combination TDF/FDT is 9-13mol%;

more preferably,

the amount of the structural unit combination SDS is 23-26mol%;

the amount of the structural unit combination TDT is 2-8mol%;

the amount of the structural unit combination FDF is 6-14mol%;

the amount of the structural unit combination SDT/TDS is 14-26mol%;

the amount of the structural unit combination SDF/FDS is 24-36mol%; and

the amount of the structural unit combination TDF/FDT is 10-13mol%.

2. A furan ring-containing polyester elastomer, comprising a reaction product of component (a) furandicarboxylic acid and/or ester thereof, component (b) aromatic dibasic acid and/or aromatic dibasic ester, component (c) aliphatic dibasic acid and component (d) aliphatic dihydric alcohol;

the ratio of the total amount by mole of component (a) and component (b) to the amount by mole of component (c) is 1:(0.9-1.05), e.g. 1:(0.95-1.02), or 1:(0.96-1.01);

the molar ratio of component (a) to component (b) is 1:(0.4-1.8), preferably 1:(0.4-1.2).

3. The furan ring-containing polyester elastomer according to claim 1 or 2, **characterized in that** the furan ring-containing polyester elastomer has 1, 2, 3, 4, 5, 6, 7, 8 or 9 of the following features:

(1) in the determination of tensile properties according to GB/T 1040.1-2018, the elongation to break is >1500%, preferably >1600%;

(2) the elastic recovery rate is greater than 70%;

(3) the weight average molecular weight is greater than 60,000, and the molecular weight distribution is 1.6-2.3; preferably, the weight average molecular weight is greater than 100,000, and the molecular weight distribution is 1.6-2.0;

(4) the average elastic recovery rate is not less than 80%;

(5) having an elastic self-enhancement ability, preferably, when the stretch ratio is 500% or higher, the elastic recovery rate is greater than 85%, and when the stretch ratio is 800% or higher, the elastic recovery rate is greater than 90%;

(6) the weight-average molecular weight is $9\text{-}15\times10^4$, the number-average molecular weight is $5\text{-}10\times10^4$, the molecular weight distribution is 1.6-2.3, the weight-average molecular weight×the number-average molecular weight is $50\text{-}120\times10^8$; preferably, the weight-average molecular weight is $10\text{-}14\times10^4$, the number-average molecular weight is $5\text{-}9\times10^4$, the molecular weight distribution is 1.6-2.0, the weight-average molecular weight×the number-average molecular weight is $60\text{-}110\times10^8$;

(7) in the determination of tensile properties according to GB/T 1040.1-2018, the tensile modulus is 8-75 MPa, e.g. 10-75 MPa, 8-25 MPa, 10-16 MPa;

(8) in the determination of tensile properties according to GB/T 1040.1-2018, the tensile strength at break is 3-20 MPa, e.g. 4-20 MPa, 3-8 MPa, or 4-6 MPa; and

(9) in the determination of tensile properties according to GB/T 1040.1-2018, there is no yield phenomenon.

4. The furan ring-containing polyester elastomer according to claim 1, **characterized in that**

the furandicarboxylic acid and/or ester thereof is at least one of 2,5-furandicarboxylic acid, dimethyl 2,5-furandicarboxylate, and diethyl 2,5-furandicarboxylate; and/or,

the aromatic dibasic acid and/or aromatic dibasic ester is selected from $C_8$-$C_{18}$ aromatic dibasic acid or aromatic dibasic ester compounds, preferably at least one of terephthalic acid, terephthalic acid ester, isophthalic acid, and isophthalic acid ester; and/or,

the aliphatic dibasic acid is at least one of $C_2$-$C_{18}$ aliphatic dibasic acids, preferably at least one of sebacic acid, succinic acid, and adipic acid; and/or,

the aliphatic dihydric alcohol is at least one of $C_2$-$C_8$ dihydric alcohols, preferably at least one of ethylene glycol, 1,3-propylene glycol, 1,4-butylene glycol, 2-methyl-1,3-propylene glycol, and neopentyl glycol.

5. A process for preparing the furan ring-containing polyester elastomer according to any one of claims 1-4, comprising: subjecting component (a) furandicarboxylic acid and/or ester thereof, component (b) aromatic dibasic acid and/or aromatic dibasic ester, component (c) aliphatic dibasic acid, component (d) aliphatic dihydric alcohol to esterification reaction, pre-polycondensation reaction, and final polycondensation reaction in sequence to produce the furan ring-containing polyester elastomer.

6. The preparation process according to claim 5, **characterized in that** the preparation process specifically comprises the following steps:

(1) subjecting component (a), component (b), component (c) and component (d) to an esterification reaction under the action of a first catalyst;
(2) when the esterification rate reaches 92-98%, a pre-polycondensation reaction is carried out under the action of a second catalyst;
(3) subjecting the reaction system obtained in step (2) to a final polycondensation reaction to produce the furan ring-containing polyester elastomer.

7. The preparation process according to claim 6, **characterized in that**:

the component (a) is at least one of 2,5-furandicarboxylic acid, dimethyl 2,5-furandicarboxylate, diethyl 2,5-furandicarboxylate; and/or,

the component (b) is selected from $C_8$-$C_{18}$ aromatic dibasic acid or aromatic dibasic ester compounds, preferably at least one of terephthalic acid, terephthalic acid ester, isophthalic acid, and isophthalic acid ester; and/or,

the component (c) is at least one of $C_2$-$C_{18}$ aliphatic dibasic acids, preferably at least one of sebacic acid, succinic acid, and adipic acid; and/or,

the component (d) is at least one of $C_2$-$C_8$ dihydric alcohols, preferably at least one of ethylene glycol, 1,3-propylene glycol, 1,4-butylene glycol, 2-methyl-1,3-propylene glycol, and neopentyl glycol; and/or,

the first catalyst includes an organic titanium compound and at least one compound containing antimony, germanium, zirconium, stannum, magnesium, cobalt, aluminium or zinc, preferably includes an organic titanium compound and at least one organic stannum compound; and/or,

the second catalyst is at least one of lanthanide series metal compounds, preferably at least one of lanthanum chloride, lanthanum acetylacetonate, neodymium isopropoxide, and lanthanum stearate.

8. The preparation process according to claim 7, **characterized in that**:

the organic titanium compound is selected from butyl titanate, tetra-n-propyl titanate, tetra-isopropyl titanate, tetraethyl titanate, and titanium glycolate; and/or,

the organic stannum compound is at least one of stannous octoate, stannous oxalate, dibutyltin oxide, butyltinhydroxide-oxide, dibutyltin diacetate, dioctyltin oxide, and butyltin tris(2-ethylhexanoate); and/or,

based on 100 parts by weight of the total amount of the first catalyst, the organic titanium compound comprises 45-85 parts, e.g. 55-75 parts or 75-85 parts; the organic stannum compound comprises 15-55 parts, e.g. 25-45 parts or 15-25 parts.

9. The preparation process according to claim 6, **characterized in that** in step (1):

the ratio of the total amount by mole of component (a), component (b) and component (c) to the amount by mole of component (d) is 1:(1.05-4), preferably 1:(1.2-2); and/or,

the ratio of the total amount by mole of component (a) and component (b) to the amount by mole of component (c) is 1:(0.9-1.05), e.g. 1:(0.95-1.02), or 1:(0.96-1.01);
the molar ratio of component (a) to component (b) is 1:(0.4-1.8), preferably 1:(0.4-1.2);
The used amount of the first catalyst is 0.01-1%, e.g. 0.1-0.3% or 0.05-0.2% by weight of the total of component (a), component (b) and component (c); and/or,
the conditions of the esterification reaction are as follows: the esterification temperature is 130-210°C, e.g. 150-190°C; the reaction time is 1-5 hours, e.g. 2-3 hours; the reaction atmosphere is a protective gas.

10. The preparation process according to claim 6, **characterized in that** in step (2):

the used amount of the second catalyst is 0.01-0.5%, preferably 0.05-0.2% by weight of the total of component (a), component (b) and component (c); and/or,
the conditions of the pre-polycondensation reaction are as follows: the reaction temperature is 150-220°C, e.g. 190-210°C; and/or, the reaction time is 0.5-2.5 hours, e.g. 1-1.5 hours; and/or, the vacuum degree is 600-5000Pa, e.g. 1000-2000Pa.

11. The preparation process according to claim 6, **characterized in that** in step (3), the conditions of the final polycondensation reaction are as follows:

the reaction temperature is 210-260°C, e.g. 230-250°C; and/or,
the reaction time is 1-5 hours, e.g. 2-4 hours; and/or,
the vacuum degree is ≤300Pa, e.g. ≤150Pa, or ≤50Pa.

12. Use of the furan ring-containing polyester elastomer according to any one of claims 1-4 or the furan ring-containing polyester elastomer obtained by the preparation process according to any one of claims 5-11 in biodegradable materials.

Figure 1

Figure 2

Figure 3

Figure 4

Figure 5

Figure 6

Figure 7a

Figure 7b

Figure 8a

Figure 8b

Figure 9

Figure 10

Figure 11

Figure 12a

Figure 12b

Figure 13a

Figure 13b

Figure 14

**EP 4 692 163 A1**

## INTERNATIONAL SEARCH REPORT

International application No.

**PCT/CN2023/132271**

### A. CLASSIFICATION OF SUBJECT MATTER

C08G63/672(2006.01)i; C08G63/00(2006.01)i

According to International Patent Classification (IPC) or to both national classification and IPC

### B. FIELDS SEARCHED

Minimum documentation searched (classification system followed by classification symbols)

IPC: C08G63

Documentation searched other than minimum documentation to the extent that such documents are included in the fields searched

Electronic data base consulted during the international search (name of data base and, where practicable, search terms used)

CNTXT, ENTXTC, CJFD, DWPI, ENTXT, CNKI, STN, web of science: 中国石油化工, 中石化, 殷杰, 张龙贵, 韩翎, 祝桂香, 王坤, 任敏巧, 贾雪飞, 宋建会, 安京燕, 赵剑锋, 张伟, 张心儒, 聚酯, 共聚酯, 弹性体, 呋喃二甲酸, 呋喃二羧酸, 对苯二甲酸, 对苯二甲酸二甲酯, 丁二酸, 琥珀酸, 癸二酸, 己二酸, 脂族, 脂肪族, 芳香族, 芳族, polyester?, copolyester?, elastomer?, +furandicarboxylic acid, FDCA, +furandicarboxylate, +terephthalic acid, TPA, dimethyl terephthalate, DMT, adipate, sebacate, succinate, adipic acid, sebacic acid, succinic acid, aliphatic, aromatic

### C. DOCUMENTS CONSIDERED TO BE RELEVANT

| Category* | Citation of document, with indication, where appropriate, of the relevant passages | Relevant to claim No. |
|---|---|---|
| A | CN 115197405 A (NORTH UNIVERSITY OF CHINA) 18 October 2022 (2022-10-18) embodiment 1 | 1-12 |
| A | US 2012220680 A1 (BASTIOLI, C. et al.) 30 August 2012 (2012-08-30) embodiments 1-4 | 1-12 |
| A | CN 103570925 A (SHANGHAI GENIUS ADVANCED MATERIALS (GROUP) CO., LTD.) 12 February 2014 (2014-02-12) embodiments 1-3 | 1-12 |
| A | CN 104341585 A (ZHEJIANG UNIVERSITY) 11 February 2015 (2015-02-11) embodiment 2 | 1-12 |
| A | CN 106397747 A (ZHUHAI WANTONG CHEMICAL CO., LTD. et al.) 15 February 2017 (2017-02-15) embodiment 13 | 1-12 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 February 2024** | **06 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

27

**INTERNATIONAL SEARCH REPORT**

International application No.

**PCT/CN2023/132271**

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | CN 113501944 A (HENAN FUNCTIONAL POLYMER MEMBRANE MATERIAL INNOVATION CENTER CO., LTD.) 15 October 2021 (2021-10-15) embodiment 1 | 1-12 |
| A | CN 115066284 A (NOVAMONT S.P.A.) 16 September 2022 (2022-09-16) description, paragraph 154 | 1-12 |
| A | CN 108586715 A (ZHEJIANG UNIVERSITY) 28 September 2018 (2018-09-28) entire document | 1-12 |
| A | JP 2022136023 A (MITSUBISHI CHEMICAL CORP.) 15 September 2022 (2022-09-15) entire document | 1-12 |
| A | FENG, Yu et al. "Synthesis and characterization of 2,5-furandicarboxylic acid poly(butanediol sebacate-butanediol) terephthalate (PBSeT) segment copolyesters with excellent water vapor barrier and good mechanical properties" *Journal of Material Science*, Vol. 57, 12 May 2022 (2022-05-12), pages 10997-11012 ISSN: 0022-2461, entire document | 1-12 |

Form PCT/ISA/210 (second sheet) (July 2022)

## INTERNATIONAL SEARCH REPORT
### Information on patent family members

International application No.

**PCT/CN2023/132271**

| Patent document cited in search report | | | Publication date (day/month/year) | Patent family member(s) | | | Publication date (day/month/year) |
|---|---|---|---|---|---|---|---|
| CN | 115197405 | A | 18 October 2022 | CN | 115197405 | B | 26 May 2023 |
| US | 2012220680 | A1 | 30 August 2012 | US | 10174157 | B2 | 08 January 2019 |
| | | | | CA | 2775178 | A1 | 12 May 2011 |
| | | | | CA | 2775178 | C | 22 May 2018 |
| | | | | EP | 2496630 | A1 | 12 September 2012 |
| | | | | EP | 2496630 | B1 | 07 September 2016 |
| | | | | JP | 2015145502 | A | 13 August 2015 |
| | | | | JP | 6267668 | B2 | 24 January 2018 |
| | | | | ES | 2605622 | T3 | 15 March 2017 |
| | | | | JP | 2017082234 | A | 18 May 2017 |
| | | | | WO | 2011054926 | A1 | 12 May 2011 |
| | | | | ITMI | 20091943 | A1 | 07 May 2011 |
| | | | | IT | 1399032 | B1 | 05 April 2013 |
| | | | | JP | 2013510213 | A | 21 March 2013 |
| | | | | CN | 102597050 | A | 18 July 2012 |
| | | | | CN | 102597050 | B | 10 June 2015 |
| CN | 103570925 | A | 12 February 2014 | WO | 2014019459 | A1 | 06 February 2014 |
| CN | 104341585 | A | 11 February 2015 | CN | 104341585 | B | 11 May 2016 |
| CN | 106397747 | A | 15 February 2017 | WO | 2018045930 | A1 | 15 March 2018 |
| | | | | EP | 3406646 | A1 | 28 November 2018 |
| | | | | EP | 3406646 | A4 | 28 August 2019 |
| | | | | EP | 3406646 | B1 | 10 November 2021 |
| | | | | ES | 2898713 | T3 | 08 March 2022 |
| CN | 113501944 | A | 15 October 2021 | None | | | |
| CN | 115066284 | A | 16 September 2022 | WO | 2021130106 | A1 | 01 July 2021 |
| | | | | IT | 201900025471 | A1 | 24 June 2021 |
| | | | | JP | 2023512421 | A | 27 March 2023 |
| | | | | EP | 4081320 | A1 | 02 November 2022 |
| | | | | US | 2023049166 | A1 | 16 February 2023 |
| | | | | CA | 3165622 | A1 | 01 July 2021 |
| | | | | KR | 20220125263 | A | 14 September 2022 |
| | | | | BR | 112022012661 | A2 | 06 September 2022 |
| CN | 108586715 | A | 28 September 2018 | None | | | |
| JP | 2022136023 | A | 15 September 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 104012018 T

- GB 36214 T